# EUROPÄISCHE PATENTANMELDUNG

(11) **EP 3 651 272 A1**
(43) Veröffentlichungstag der Anmeldung: **13.05.2020**
(21) Anmeldenummer: 19203776.0
(22) Anmeldetag: 17.10.2019
(51) Int. Cl.: H01R 4/48, H01R 25/16, H02B 1/056, H02G 5/02

(54) **STROMSCHIENENSYSTEM**

(30) Priorität: 07.11.2018 DE 102018127715
(71) Anmelder: Phoenix Contact GmbH & Co. KG, 32825 Blomberg (DE)
(72) Erfinder: Reibke, Heinz, 32105 Bad Salzuflen (DE); ANDRESEN, Jens, 32825 Blomberg (DE); BERGHAHN, Kevin, 32825 Blomberg (DE)

(57) **Zusammenfassung**

Ein Stromschienensystem (1) zum Anschließen von elektrischen Baugruppen (6) an einen elektrischen Leistungsstromkreis (2) umfasst ein Gehäuse (10), eine an dem Gehäuse (10) angeordnete, entlang einer Längsrichtung (L) erstreckte Stromschiene (112, 122), die mit dem elektrischen Leistungsstromkreis (2) verbindbar ist, und eine Anschlussreihe (11, 12), die eine Mehrzahl von entlang der Längsrichtung (L) zueinander versetzten Steckplätzen (110, 111, 120, 121) zum Anschließen von elektrischen Baugruppen (6) an die Stromschiene (110, 120) aufweist. Die Stromschiene (112, 122) weist zumindest einen entlang der Längsrichtung (L) erstreckten Balkenabschnitt (113, 123), dem zumindest ein erster Steckplatz (110, 120) der Mehrzahl von Steckplätzen (110, 111, 120, 121) zugeordnet ist und an den ein elektrischer Steckverbinder (3) mit einer Verbindungseinrichtung (311) ansteckbar ist, und zumindest eine Klemmeneinrichtung (114, 124), der zumindest ein zweiter Steckplatz (111, 121) der Mehrzahl von Steckplätzen (110, 111, 120, 121) zugeordnet ist und an die ein elektrischer Leiter (5) anschließbar ist, auf.

## Beschreibung

Die Erfindung betrifft ein Stromschienensystem zum Anschließen von elektrischen Baugruppen an einen elektrischen Leistungsstromkreis nach dem Oberbegriff des Anspruchs 1.

Ein derartiges Stromschienensystem umfasst ein Gehäuse, eine an dem Gehäuse angeordnete, entlang einer Längsrichtung erstreckte Stromschiene, die mit dem elektrischen Leistungsstromkreis verbindbar ist, und einer Anschlussreihe, die eine Mehrzahl von entlang der Längsrichtung zueinander versetzten Steckplätzen zum Anschließen von elektrischen Baugruppen an die Stromschiene aufweist.

Über ein solches Stromschienensystem können elektrische Baugruppen, zum Beispiel Schalteinrichtungen wie Schutzschalter im Bereich der Gebäudetechnik und Gebäudeautomatisierung oder im Bereich des Anlagenbaus, gemeinsam an einen Leistungsstromkreis angeschlossen werden. Eine Stromschiene des Stromschienensystems erstreckt sich hierbei längs entlang einer Längsrichtung, wobei an aneinander angereihte Steckplätze eine Mehrzahl von elektrischen Baugruppen angeschlossen und die elektrischen Baugruppen somit unter gemeinsamer Kontaktierung der Stromschiene an das Stromschienensystem angeschlossen werden können.

Ein solches Stromschienensystem, auch bezeichnet als Sammelschiene oder Sammelschienensystem, kann eine Mehrzahl von Stromschienen aufweisen, die ein Anschließen von elektrischen Baugruppen zum Beispiel an einen Leistungsstromkreis ermöglichen, der einen mehrphasigen Wechselstrom bereitstellt.

Üblicherweise sind an ein solches Stromschienensystem elektrische Baugruppen anzuschließen, die über einen in vorbestimmter Weise ausgestalteten, der Stromschiene angepassten Steckverbinder verfügen. Ein solcher Steckverbinder kann beispielsweise eine Verbindungseinrichtung in Form einer Kontakttulpe oder dergleichen verwirklichen, die auf die balkenförmig erstreckte Stromschiene aufgesteckt werden kann, um auf diese Weise die elektrische Baugruppe an die Stromschiene anzuschließen. Elektrische Baugruppen, die nicht über einen Steckverbinder der vorbestimmten Art verfügen, können nicht ohne weiteres an ein solches Stromschienensystem angeschlossen werden.

Bei einem aus der EP 0 862 247 B1 bekannten Stromschienensystem, in der EP 0 862 247 B1 bezeichnet als Sammelschienensystem, können elektrische Geräte, insbesondere Niederspannungsschaltgeräte, an ein kanalartiges Kammersystem, in dem Leiterschienen aufgenommen sind, angeschlossen werden.

Die EP 1 322 000 B1 offenbart eine Verbindungsklemme zum Anschließen an eine Stromschiene.

Die EP 2 461 440 A2 offenbart ein Stecksystem, das ein Unterteil aufweist, auf dem Stromschienen angeordnet werden können. Auf dem Stecksystem können Schutzgeräte mit elektrischen Kontakten angeordnet werden.

Aufgabe der vorliegenden Erfindung ist es, ein Stromschienensystem zum Anschließen von elektrischen Baugruppen an einen elektrischen Leistungsstromkreis zur Verfügung zu stellen, das auf einfache, flexible Weise das Anschließen unterschiedlicher elektrischer Baugruppen ermöglicht.

Diese Aufgabe wird durch einen Gegenstand mit den Merkmalen des Anspruchs 1 gelöst.

Demnach weist die Stromschiene zumindest einen entlang der Längsrichtung erstreckten Balkenabschnitt, dem zumindest ein erster Steckplatz der Mehrzahl von Steckplätzen zugeordnet ist und an den ein elektrischer Steckverbinder mit einer Verbindungseinrichtung ansteckbar ist, und zumindest eine Klemmeneinrichtung, der zumindest ein zweiter Steckplatz der Mehrzahl von Steckplätzen zugeordnet ist und an die ein elektrischer Leiter anschließbar ist, auf. Neben der Federkraftanschlusstechnik wäre jedoch auch eine andere Anschlusstechnik, wie z.B. die Schraubanschlusstechnik möglich.

Demnach sind an der Anschlussreihe Steckplätze unterschiedlicher Ausgestaltung miteinander kombiniert. Erste Steckplätze dienen dazu, elektrische Baugruppe mit einem Steckverbinder anzuschließen, der über eine Verbindungseinrichtung an einen balkenförmig entlang der Längsrichtung erstreckten Balkenabschnitt der Stromschiene angesteckt werden kann. An den zweiten Steckplätzen können demgegenüber elektrische Leiter angeschlossen werden, wobei an solchen zweiten Steckplätzen Klemmeneinrichtungen an der Stromschiene angeordnet sind, die ein steckendes Anschließen von elektrischen Leitern (also elektrischen Einzeladern) ermöglichen, indem ein elektrischer Leiter mit einem abisolierten Leiterende an eine zugeordnete Klemmeneinrichtung angesteckt werden kann.

Die zumindest eine Klemmeinrichtung kann zum Beispiel durch eine Federkraftklemme oder eine Schraubklemme ausgebildet sein.

Es können somit einerseits elektrische Baugruppen, die über den ersten Steckplätzen des Stromschienensystems angepasste Steckverbinder verfügen, an das Stromschienensystem angeschlossen werden. Zudem können andererseits elektrische Baugruppen, die nicht über solche angepassten Steckverbinder verfügen, an das Stromschienensystem angeschlossen werden, indem eine Verbindung zwischen diesen elektrischen Baugruppen und dem Stromschienensystem über elektrische Leiter hergestellt wird, die an zweite Steckplätze und diesen zweiten Steckplätzen zugeordnete Klemmeneinrichtungen angeschlossen werden. Es können somit auch Baugruppen ohne besondere, dem Stromschienensystem angepasste Steckverbinder an das Stromschienensystem angeschlossen werden.

In einer Ausgestaltung weist die Stromschiene eine Mehrzahl von entlang der Längsrichtung zueinander beabstandeten Balkenabschnitten auf, wobei zwischen je zwei Balkenabschnitten eine Klemmeneinrichtung angeordnet ist. Die Stromschiene erstreckt sich an ihren Balkenabschnitten balkenförmig längs entlang der Längsrichtung. Zwischen je zwei benachbarten Balkenabschnitten ist hierbei eine Klemmeneinrichtung angeordnet, sodass zwischen den Balkenabschnitten zugeordneten ersten Steckplätzen zumindest ein der Klemmeneinrichtung zugeordneter zweiter Steckplatz angeordnet ist.

Vorzugsweise ist hierbei einem jeden Balkenabschnitt eine Mehrzahl von ersten Steckplätzen zugeordnet, während der Klemmeneinrichtung genau ein zweiter Steckplatz zugeordnet ist. Es ergibt sich eine Anordnung, bei der auf eine Mehrzahl von ersten Steckplätzen ein zweiter Steckplatz und sodann wieder eine Mehrzahl von ersten Steckplätzen folgt. Beispielsweise können einem jeden Balkenabschnitt vier erste Steckplätze zugeordnet sein, sodass auf eine Vierergruppe von ersten Steckplätzen ein zweiter Steckplatz und sodann wieder eine Vierergruppe von ersten Steckplätzen folgt.

In einer Ausgestaltung weist die Stromschiene eine Mehrzahl von entlang der Längsrichtung zueinander beabstandeten Klemmeneinrichtungen auf, wobei zwischen je zwei Klemmeneinrichtungen ein Balkenabschnitt angeordnet ist. Es ergibt sich eine alternierende Anordnung von Klemmeneinrichtungen und Balkenabschnitten, bei der zwischen je zwei Klemmeneinrichtungen ein Balkenabschnitt und zwischen zwei Balkenabschnitten eine Klemmeneinrichtung angeordnet ist.

Die Klemmeneinrichtungen können hierbei, betrachtet entlang der Längsrichtung, regelmäßig zueinander beabstandet sein, sodass sich eine regelmäßige, gleichverteilte, alternierende Anordnung ergibt, bei der die zwischen je zwei Klemmeneinrichtungen erstreckten Balkenabschnitte jeweils die gleiche Länge aufweisen.

In einer Ausgestaltung weist das Stromschienensystem mehrere parallel zueinander erstreckte Stromschienen auf. Einer jeden Stromschiene ist hierbei eine entlang der Längsrichtung erstreckte Anschlussreihe mit einer Mehrzahl von aneinander angereihten Steckplätzen zugeordnet, wobei jede Anschlussreihe erste Steckplätze zum Anschließen von über Steckverbinder verfügenden elektrischen Baugruppen und zweite Steckplätze zum Anschließen von elektrischen Leitern (Einzeladern) aufweist. Eine jede Stromschiene weist somit Balkenabschnitte und Klemmeneinrichtungen auf, wobei vorteilhafterweise jeweils zwischen zwei benachbarten Balkenabschnitten eine Klemmeneinrichtung und umgekehrt zwischen zwei Klemmeneinrichtungen ein Balkenabschnitt angeordnet ist.

Bei dem Stromschienensystem können auch mehrere Gehäuse mit daran angeordneten Stromschienen miteinander kombiniert und längs entlang einer quer zur Längsrichtung erstreckten Anreihrichtung aneinander angereiht werden, sodass das Stromschienensystem beliebig erweitert werden kann.

In einer Ausgestaltung verwirklicht die einem jeden zweiten Steckplatz zugeordnete Klemmeneinrichtung eine Federkraftklemme und weist ein Federelement auf, das an einem Stützabschnitt der Stromschiene abgestützt und somit zu der Stromschiene festgelegt ist. Das Federelement weist beispielsweise einen Stützschenkel auf, der mit dem Stützabschnitt der Stromschiene in Verbindung steht und somit das Federelement in Position zu der Stromschiene hält. Zu dem Stützschenkel ist ein Klemmschenkel des Federelements elastisch auslenkbar derart, dass ein elektrischer Leiter mit einem abisolierten Leiterende (an dem gegebenenfalls eine Aderendhülse oder dergleichen angeordnet sein kann) an den Klemmschenkel ansetzbar ist und der elektrische Leiter unter Auslenkung des Klemmschenkels an der Klemmeneinrichtung klemmend arretiert wird. In einer angeschlossenen Stellung kann das Leiterende über den Klemmschenkel beispielsweise gegen den Stützabschnitt der Stromschiene gedrückt werden, sodass das Leiterende gegenüber dem Stützabschnitt verklemmt und mit der Stromschiene elektrisch kontaktiert ist.

Die Klemmeneinrichtung kann, in einer Ausgestaltung, ein Betätigungselement nach Art eines Drückers aufweisen, das betätigbar ist, um den Klemmschenkel auszulenken und um dadurch ein kraftloses Anschließen eines elektrischen Leiters oder ein Entfernen eines angeschlossenen elektrischen Leiters zu ermöglichen.

In einer Ausgestaltung ist das Gehäuse aus einem elektrisch isolierenden Material gefertigt und fasst die Stromschiene derart ein, dass ein Nutzer von außen nicht in Berührung mit der Stromschiene gelangen kann. Die Stromschiene ist somit berührsicher in dem Gehäuse aufgenommen, sodass die Sicherheit für einen Nutzer bei der Handhabung des Stromschienensystems verbessert ist. Ein Nutzer kann in diesem Fall eine elektrische Baugruppe von außen an das Gehäuse ansetzen und beispielsweise mit einem Steckverbinder an einen ersten Steckplatz anstecken, sodass die elektrische Baugruppe über den Steckverbinder mit einem Balkenabschnitt der in dem Gehäuse eingefassten Stromschiene in Kontakt gelangt und die elektrische Baugruppe somit an das Stromschienensystem angeschlossen wird.

Ein Baukastensystem umfasst vorzugsweise ein Stromschienensystem der vorangehend beschriebenen Art und Steckverbinder, die an erste Steckplätze des Stromschienensystems angeschlossen werden können. Solche Steckverbinder umfassen beispielsweise Verbindungseinrichtungen, die nach Art von Kontakttulpen ausgebildet sind und an einen Balkenabschnitt der in dem Gehäuse eingefassten Stromschiene angesteckt werden können, um auf diese Weise den Steckverbinder elektrisch mit der Stromschiene zu kontaktieren. Die Verbindungseinrichtung wird beispielsweise durch zwei Kontaktschenkel gebildet, die dazu ausgebildet sind, zwischen sich den Balkenabschnitt aufzunehmen, wenn der Steckverbinder mit der Verbindungseinrichtung an einen Balkenabschnitt der Stromschiene angesteckt wird, wobei die Kontaktschenkel über eine Klemmfeder gegeneinander elastisch vorgespannt sein können, sodass die Kontaktschenkel unter elastischer Vorspannung in Anlage mit dem Balkenabschnitt gelangen und den Balkenabschnitt somit mit Vorspannung kontaktieren.

Ein solches Stromschienensystem kann zum Anschließen ganz unterschiedlicher elektrischer Baugruppen, zum Beispiel von Schalteinrichtungen, zum Beispiel Schutzschaltern, im Bereich der Gebäudetechnik und -automatisierung oder auch im Anlagenbau oder dergleichen zum Einsatz kommen.

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Stromschienensystems zum Anschließen elektrischer Baugruppen;
- Fig. 2: eine Draufsicht auf das Stromschienensystem;
- Fig. 3: eine Ansicht des Stromschienensystems, mit angeschlossenen Steckverbindern und angeschlossenen elektrischen Leitern;
- Fig. 4: eine ausschnittsweise vergrößerte Ansicht der Anordnung gemäß Fig. 3;
- Fig. 5: eine Ansicht des Stromschienensystems, darstellend in einem Gehäuse eingefasste Stromschienen;
- Fig. 6: eine gesonderte Ansicht der Stromschienen mit daran angeordneten Federkraftklemmen;
- Fig. 7: eine Ansicht der Stromschienen mit angeschlossenen elektrischen Kontaktbaugruppen von Steckverbindern; und
- Fig. 8: eine ausschnittsweise vergrößerte Ansicht der Anordnung gemäß Fig. 7.

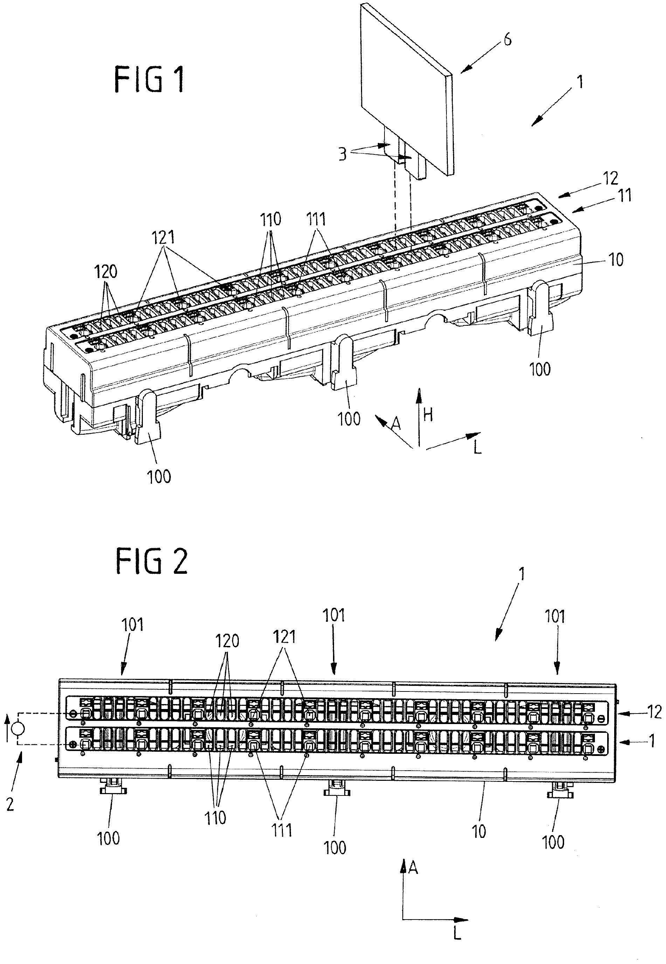

Fig. 1 bis 8 zeigen ein Ausführungsbeispiel eines Stromschienensystems 1, bei dem in einem Gehäuse 10 zwei parallel zueinander entlang einer Längsrichtung L erstreckte Stromschienen 112, 122 eingefasst sind.

Das Stromschienensystem 1 dient dazu, elektrische Baugruppen 6 (schematisch eingezeichnet in Fig. 1) gemeinsam an die in dem Gehäuse 10 eingefassten Stromschienen 112, 122 anzuschließen, um elektrische Baugruppen 6 in elektrische Verbindung mit einem mit den Stromschienen 112, 122 verbundenen elektrischen Leistungskreis 2 (schematisch eingezeichnet in Fig. 2) zu bringen. Über das Stromschienensystem 1 können die elektrischen Baugruppen 6 somit gemeinsam an eine übergeordnete elektrische Versorgung angeschlossen werden, wobei die Stromschienen 112, 122 die über den Leistungskreis 2 bereitgestellte Versorgungsspannung verteilen und elektrische Baugruppen 6 somit auf das gleiche Potenzial legen.

Oberseitig des Gehäuses 10 sind zwei parallel zueinander erstreckte Anschlussreihen 11, 12 ausgebildet, die jeweils eine Mehrzahl von Steckplätzen 110, 111, 120, 121 aufweisen und jeweils einer der Stromschienen 112, 122 zugeordnet sind. Über die Steckplätze 110, 111, 120, 121 können unterschiedliche elektrische Baugruppen 6 an das Stromschienensystem 1 angeschlossen werden, wie nachfolgend erläutert werden soll.

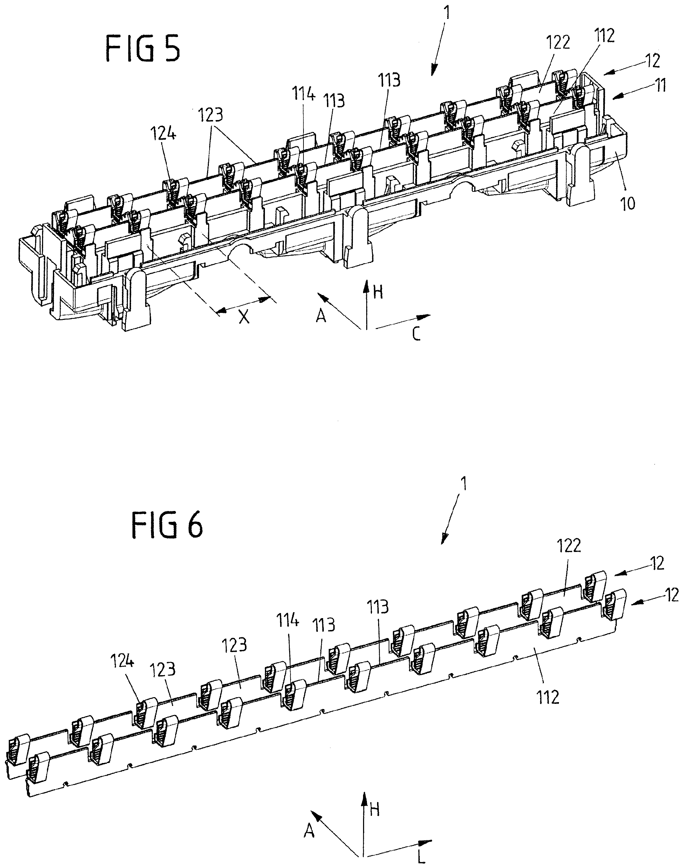

Wie aus Fig. 6 ersichtlich, erstrecken sich die Stromschiene 112, 122 jeweils längs entlang der Längsrichtung L und sind hierbei entlang einer quer zur Längsrichtung L erstreckten Anreihrichtung A zueinander beabstandet. Die Stromschienen 112, 122 sind derart in dem Gehäuse 10 eingefasst, dass ein Nutzer bei bestimmungsgemäßer Handhabung des Stromschienensystems 1 nicht in Berührung mit den Stromschienen 112, 122 gelangen kann und die Stromschienen 112, 122 somit berührsicher in dem Gehäuse 10 verborgen sind.

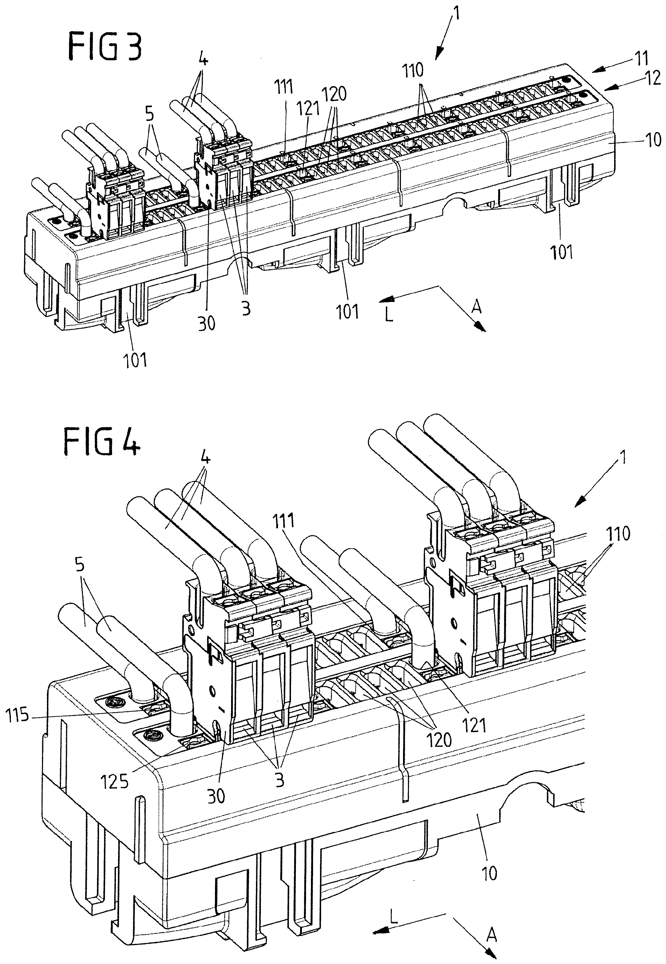

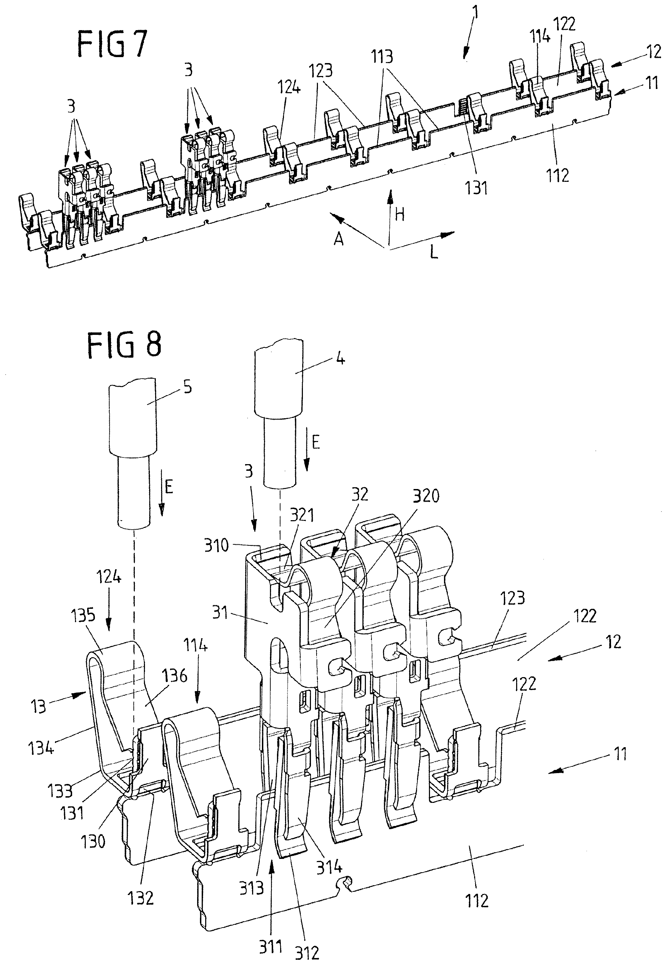

Die Stromschienen 112, 122 weisen jeweils Balkenabschnitte 113, 123 auf, die ersten Steckplätzen 110, 120 der Anschlussreihe 11, 12 zugeordnet sind und ein Anschließen von elektrischen Baugruppen 6 mit Steckverbindern 3 ermöglichen, wie dies aus Fig. 3 und 4 in Zusammenschau mit Fig. 7 und 8 ersichtlich ist. Die Balkenabschnitte 113, 123 erstrecken sich jeweils längs entlang der Längsrichtung L und sind mit einer oberen Kante den Steckplätzen 110, 120 an der Oberseite des Gehäuses 10 zugewandt, sodass die Steckverbinder 3 mittels Verbindungseinrichtungen 311 von in einem Steckverbindergehäuse 30 eingefassten Kontaktbaugruppen 31 an die Balkenabschnitte 113, 123 angesteckt werden können.

Die Verbindungseinrichtungen 311 verwirklichen, wie dies insbesondere aus Fig. 7 und 8 ersichtlich ist, Kontakttulpen und weisen jeweils zwei Kontaktschenkel 312, 313 auf, die bei Anstecken der Verbindungseinrichtung 311 an einen zugeordneten Balkenabschnitt 113, 123 den Balkenabschnitt 113, 123 zwischen sich aufnehmen und somit eine klemmende Verbindung zwischen dem Steckverbinder 3 und dem Balkenabschnitt 113, 123 herstellen. Die Kontaktschenkel 312, 313 sind über eine Klemmfeder 314 elastisch zueinander vorgespannt, sodass die Kontaktschenkel 312, 313 bei Anstecken an einen Balkenabschnitt 113, 123 unter elastischer Vorspannung in Anlage mit dem Balkenabschnitt 113, 123 gelangen und somit eine elektrische Kontaktierung unter elastischer Vorspannung hergestellt wird.

Bei dem dargestellten Ausführungsbeispiel weisen die Steckverbinder 3 an ihren Kontaktbaugruppen 31 jeweils ein Federelement 32 auf, das mit einem Stützschenkel 320 mit der Kontaktbaugruppe 31 verbunden ist und einen zu dem Stützschenkel 320 auslenkbaren Klemmschenkel 321 zum steckenden Anschließen eines elektrischen Leiters 4 aufweist. Ein elektrischer Leiter 4 kann mit einem abisolierten Leiterende (an dem beispielsweise eine Aderendhülse angebracht sein kann) entlang einer parallel zu einer Höhenrichtung H erstreckten Steckrichtung E derart an die Kontaktbaugruppe 31 angesteckt werden, dass der elektrische Leiter 4 mit dem Klemmschenkel 321 in Berührung gelangt und der elektrische Leiter 4 unter Auslenkung des Klemmschenkels 321 klemmend an der Kontaktbaugruppe 31 arretiert wird. Der elektrische Leiter 4 gelangt mit seinem abisolierten Leiterende hierbei in Anlage mit einem Kontaktabschnitt 310 der Kontaktbaugruppe 31 und wird auf diese Weise mit der Kontaktbaugruppe 31 und darüber mit der Stromschiene 112, 122 elektrisch kontaktiert.

Zwischen je zwei benachbarten Balkenabschnitten 113, 123 einer jeden Stromschiene 112, 122 ist, bei dem dargestellten Ausführungsbeispiel, eine Klemmeneinrichtung in Form einer Federkraftklemme 114, 124 angeordnet, die ein Anschließen eines elektrischen Leiters 5 entlang der Steckrichtung E ermöglicht. Über die Federkraftklemmen 114, 124 können elektrische Baugruppen, die über keinen Steckverbinder 3 der in Fig. 3, 4 und Fig. 7, 8 dargestellten Art verfügen, an das Stromschienensystem 1 angeschlossen werden, indem solche elektrischen Baugruppen über Einzeladern verwirklichende elektrische Leiter 5 mit dem Stromschienensystem 1 verbunden werden.

Eine jede Federkraftklemme 114, 124 weist ein Federelement 13 auf, das über einen Stützschenkel 130 an einem nach Art einer Lasche an der zugeordneten Stromschiene 112, 122 geformten Stützabschnitt 131 abgestützt ist. Zu dem Stützschenkel 130 ist ein Basisabschnitt 133 des Federelements 13 abgewinkelt, im Bereich dessen eine Öffnung 132 geformt ist, durch die hindurch der Stützabschnitt 131 der zugeordneten Stromschiene 112, 122 greift, wie dies insbesondere aus Fig. 8 ersichtlich ist. Zu dem Basisabschnitt 133 ist wiederum ein Schenkelabschnitt 134 abgewinkelt, der über einen Biegungsabschnitt 135 in einen Klemmschenkel 136 übergeht.

Der Klemmschenkel 136 ist, wenn kein elektrischer Leiter 5 angesteckt ist, in Anlage mit dem Stützabschnitt 131 der Stromschiene 112, 122. Wird ein elektrischer Leiter 5 entlang der Steckrichtung E an das Federelement 13 der Federkraftklemme 114, 124 angesteckt, so wird der Klemmschenkel 136 elastisch zu dem Stützschenkel 130 ausgelenkt, sodass der elektrische Leiter 5 mit einem abisolierten Leiterende (an dem gegebenenfalls eine Aderendhülse oder dergleichen angeordnet sein kann) in eine Zwischenlage zwischen dem Klemmschenkel und dem Stützabschnitt 131 gelangt und somit elektrisch mit dem Stützabschnitt 131 und darüber mit der Stromschiene 112, 122 kontaktiert.

Bei dem dargestellten Ausführungsbeispiel sind einem jeden Balkenabschnitt 113, 123 vier erste Steckplätze zugeordnet, an die jeweils ein Steckverbinder 3 mit einer Verbindungseinrichtung 311 angesteckt werden kann. Zwischen zwei benachbarten Balkenabschnitten 113, 123 ist jeweils eine Federkraftklemme 114, 124 angeordnet, die einem zweiten Steckplatz 111, 121 zugeordnet ist und an die ein eine Einzelader verwirklichender elektrischer Leiter 5 angesteckt und somit mit der Stromschiene 112, 122 kontaktiert werden kann.

Die Federkraftklemmen 114, 124 sind hierbei regelmäßig zueinander beabstandet. Benachbarte Federkraftklemmen 114, 124 weisen jeweils einen Abstand X zueinander auf. Entsprechend sind die zwischen den Federkraftklemmen 114, 124 erstreckten Balkenabschnitten 113, 123 jeweils gleich lang. Es ergibt sich eine Anordnung, bei der - betrachtet entlang der Längsrichtung L - auf eine Gruppe von vier einem Balkenabschnitt 113, 123 zugeordneten, ersten Steckplätzen 110, 120 ein einer Federkraftklemme 114, 124 zugeordneter zweiter Steckplatz 111, 121 und sodann wiederum eine Gruppe von vier ersten Steckplätzen 110, 120 folgt.

Weil bei dem Stromschienensystem 1 unterschiedliche Steckplätze 110, 111, 120, 121 miteinander kombiniert sind, können unterschiedlich geartete elektrische Baugruppen 6 an das Stromschienensystem 1 angeschlossen werden. Insbesondere können auch solche elektrischen Baugruppen, die nicht über einen Steckverbinder 3 verfügen, über Einzeladern verwirklichende elektrische Leiter 5 an das Stromschienensystem 1 angeschlossen werden.

An dem Gehäuse 10 sind, an entlang der Anreihrichtung A einander abgewandten Seiten, einerseits Verbindungselemente 10 und andererseits zu den Verbindungselementen 100 komplementäre Verbindungsstellen 101 angeordnet. Über die Verbindungselemente 100 und die Verbindungsstellen 101 können mehrere Gehäuse 10 entlang der Anreihrichtung A aneinander angereiht und miteinander kombiniert werden, sodass das Stromschienensystem 1 durch Vorsehen weiterer Gehäuse 10 und darin eingefasster Stromschienen 112, 122 modular erweitert werden kann.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen.

An ein solches Stromschienensystem können ganz unterschiedliche elektrische Baugruppen, beispielsweise Schalteinrichtungen, aber auch andere elektrische Geräte und Funktionsmodule angeschlossen werden. Über ein solches Stromschienensystem können elektrische Baugruppen an einen gemeinsamen elektrischen Leistungskreis angeschlossen und somit gemeinsam elektrisch versorgt werden.

### Bezugszeichenliste

- 1: Ladesteckverbinder
- 10: Gehäuse
- 100: Verbindungselement
- 101: Verbindungsstelle
- 11, 12: Anschlussreihe
- 110,120: Steckplatz
- 111, 121: Steckplatz
- 112, 122: Stromschiene
- 113,123: Balkenabschnitt
- 114, 124: Federkraftklemme
- 115, 125: Betätigungselement
- 13: Federelement
- 130: Stützschenkel
- 131: Stützabschnitt
- 132: Öffnung
- 133: Basisabschnitt
- 134: Schenkelabschnitt
- 135: Biegungsabschnitt
- 136: Klemmschenkel
- 2: Leistungsstromkreis
- 3: Steckverbinder
- 30: Gehäuse
- 31: Kontaktbaugruppe
- 310: Kontaktabschnitt
- 311: Verbindungseinrichtung (Kontakttulpe)
- 312,313: Kontaktschenkel
- 314: Klemmfeder
- 32: Federelement
- 320: Stützschenkel
- 321: Klemmschenkel
- 4: Elektrischer Leiter
- 5: Elektrischer Leiter
- 6: Elektrische Baugruppe
- A: Anreihrichtung
- E: Steckrichtung
- H: Höhenrichtung
- L: Längsrichtung
- X: Abstand

## Patentansprüche

1. Stromschienensystem (1) zum Anschließen von elektrischen Baugruppen (6) an einen elektrischen Leistungsstromkreis (2), mit einem Gehäuse (10), einer an dem Gehäuse (10) angeordneten, entlang einer Längsrichtung (L) erstreckten Stromschiene (112, 122), die mit dem elektrischen Leistungsstromkreis (2) verbindbar ist, und einer Anschlussreihe (11, 12), die eine Mehrzahl von entlang der Längsrichtung (L) zueinander versetzten Steckplätzen (110, 111, 120, 121) zum Anschließen von elektrischen Baugruppen (6) an die Stromschiene (110, 120) aufweist, **dadurch gekennzeichnet, dass** die Stromschiene (112, 122) zumindest einen entlang der Längsrichtung (L) erstreckten Balkenabschnitt (113, 123), dem zumindest ein erster Steckplatz (110, 120) der Mehrzahl von Steckplätzen (110, 111, 120, 121) zugeordnet ist und an den ein elektrischer Steckverbinder (3) mit einer Verbindungseinrichtung (311) ansteckbar ist, und zumindest eine Klemmeneinrichtung (114, 124), der zumindest ein zweiter Steckplatz (111, 121) der Mehrzahl von Steckplätzen (110, 111, 120, 121) zugeordnet ist und an die ein elektrischer Leiter (5) anschließbar ist, aufweist.

2. Stromschienensystem (1) nach Anspruch 1, **dadurch gekennzeichnet, dass** die zumindest eine Klemmeinrichtung (114, 124) durch eine Federkraftklemme oder eine Schraubklemme ausgebildet ist.

3. Stromschienensystem (1) nach Anspruch 1 oder 2, **dadurch gekennzeichnet, dass** die Stromschiene (112, 122) eine Mehrzahl von entlang der Längsrichtung (L) zueinander beabstandeten Balkenabschnitten (113, 123) aufweist, wobei zwischen je zwei Balkenabschnitten (113, 123) eine Klemmeneinrichtung (114, 124) angeordnet ist.

4. Stromschienensystem (1) nach Anspruch 3, **dadurch gekennzeichnet, dass** jedem Balkenabschnitt (113, 123) eine Mehrzahl von ersten Steckplätzen (110, 120) zugeordnet ist, wobei zwischen je zwei Balkenabschnitten (113, 123) genau eine einem zweiten Steckplatz (111, 121) zugeordnete Klemmeneinrichtung (114, 124) angeordnet ist.

5. Stromschienensystem (1) nach einem der vorangehenden Ansprüche, **dadurch gekennzeichnet, dass** die Stromschiene (112, 122) eine Mehrzahl von entlang der Längsrichtung (L) zueinander beabstandeten Klemmeneinrichtung (114, 124) aufweist, wobei zwischen je zwei Klemmeneinrichtung(114, 124) ein Balkenabschnitt (113, 123) angeordnet ist.

6. Stromschienensystem (1) nach Anspruch 5, **dadurch gekennzeichnet, dass** die Klemmeneinrichtungen (114, 124), betrachtet entlang der Längsrichtung (L), regelmäßig zueinander beabstandet sind.

7. Stromschienensystem (1) nach einem der vorangehenden Ansprüche, **gekennzeichnet durch** eine parallel zu der Stromschiene (112, 122) erstreckte, weitere Stromschiene, der eine parallel zu der Anschlussreihe (11, 12) erstreckte, weitere Anschlussreihe mit einer Mehrzahl von entlang der Längsrichtung (L) zueinander versetzten Steckplätzen zum Anschließen von elektrischen Baugruppen (6) an die weitere Stromschiene zugeordnet ist.

8. Stromschienensystem (1) nach einem der vorangehenden, **dadurch gekennzeichnet, dass** die zumindest eine Klemmeneinrichtung (114, 124) eine Federkraftklemme verwirklicht, die ein Federelement (13) aufweist, das an einem Stützabschnitt (131) der Stromschiene (112, 122) abgestützt ist.

9. Stromschienensystem (1) nach Anspruch 8, **dadurch gekennzeichnet, dass** das Federelement (13) einen an dem Stützabschnitt (131) der Stromschiene (112, 122) abgestützten Stützschenkel (130) und einen elastisch zu dem Stützschenkel (130) auslenkbaren Klemmschenkel (136) zum klemmenden Arretieren eines an die zumindest eine Klemmeneinrichtung (114, 124) angeschlossenen elektrischen Leiters (5) aufweist.

10. Stromschienensystem (1) nach einem der vorangehenden, **dadurch gekennzeichnet, dass** das Gehäuse (10) die Stromschiene (112, 122) berührsicher einfasst.

11. Baukastensystem mit einem Stromschienensystem (1) nach einem der vorangehenden Ansprüche und zumindest einer elektrischen Baugruppe (6), die einen Steckverbinder (3) mit einer Verbindungseinrichtung (311) aufweist und die an den zumindest einen Balkenabschnitt (113, 123) ansteckbar ist.

12. Baukastensystem nach Anspruch 11, **dadurch gekennzeichnet, dass** die Verbindungseinrichtung (311) zumindest einen Kontaktschenkel (312, 313) zum Kontaktieren mit dem zumindest einen Balkenabschnitt (113, 123) aufweist.

13. Baukastensystem nach Anspruch 11 oder 12, **dadurch gekennzeichnet, dass** die Verbindungseinrichtung (311) zwei Kontaktschenkel (312, 313) aufweist, die ausgebildet sind, den zumindest einen Balkenabschnitt (113, 123) bei Anstecken des Steckverbinders (3) an den zumindest einen Balkenabschnitt (113, 123) klemmend zwischen sich aufzunehmen.
